# EUROPEAN PATENT APPLICATION

(11) **EP 4 726 883 A1**
(43) Date of publication of application: **15.04.2026**
(21) Application number: 25203891.4
(22) Date of filing: 23.09.2025
(51) Int. Cl.: H01M 50/211, H01M 50/247, H01M 50/284, H01M 50/291, H01M 50/293, H01M 50/296

(54) **BATTERY PACK**

(30) Priority: 30.09.2024 JP 2024169822
(71) Applicant: Yamabiko Corporation, Ohme-shi, Tokyo 198-8760 (JP)
(72) Inventor: ICHIKAWA, Masashi, Tokyo, 1988760 (JP); FUNAMOTO, Kunio, Tokyo, 1988760 (JP); KONO, Toru, Tokyo, 1988760 (JP); NAGAISHI, Hideki, Tokyo, 1988760 (JP)
(74) Representative: Winter, Brandl - Partnerschaft mbB

(57) **Abstract**

According to an aspect of the present disclosure, there is provided a battery pack that is attachable to and detachable from an object by relatively moving the battery pack in a predetermined direction to the object, the battery pack including: a plurality of pouch-type battery cells arranged in a row in the predetermined direction with each of electrodes of the pouch-type battery cells on a same side; and a wiring board configured to allow the electrodes of the pouch-type battery cells to be connected thereto.

## Description

### BACKGROUND

The present disclosure relates to a battery pack.

### RELATED ART

EP 2269246 B1 discloses an energy storage module that has an optimal ratio of volume, weight, and/or material/component requirements to the energy that can be stored in the energy storage module, and is as safe as possible.

This energy storage module is based in particular on a battery pack for powering an electric power tool, which comprises a plurality of cells electrically interconnected for energy storage. The cells are proposed to be electrochemical power storage cells configured by a dimensionally unstable flexible cell casing. EP 2269246 B1 also relates to a power tool including at least one such energy storage module.

### SUMMARY

### Problems to be Solved by Invention

However, the conventional technology disclosed in EP 2269246 B1 still has room for improvement.

In view of the above circumstances, the present disclosure provides a battery pack that can be connected to the same object even when the number of pouch-type battery cells is changed.

### Means for Solving Problems

According to an aspect of the present disclosure, there is provided a battery pack that is attachable to and detachable from an object by relatively moving the battery pack in a predetermined direction to the object, the battery pack including: a plurality of pouch-type battery cells arranged in a row in the predetermined direction with each of electrodes of the pouch-type battery cells on a same side; and a wiring board configured to allow the electrodes of the pouch-type battery cells to be connected thereto.

According to such an aspect, it is possible to provide a battery pack that can be connected to the same object even when the number of pouch-type battery cells is changed.

### BRIEF DESCRIPTION OF DRAWINGS

FIG. 1 is a perspective view of an object as seen from above.
FIG. 2 is an overall perspective view of a battery pack.
FIG. 3 is an exploded perspective view showing a configuration of a wiring board, pouch-type battery cells, and a fixing member.
FIG. 4 is an exploded perspective view showing a configuration of a case, a wiring board, pouch-type battery cells, and a fixing member.
FIG.5 is an overall view of the battery pack.
FIG.6 is an overall view of the battery pack.
FIG. 7 is a cross-sectional view taken along line A-A shown in FIG. 5 for explaining an internal configuration of the battery pack.
FIG. 8 is a cross-sectional perspective view taken along line B-B shown in FIG. 5 for explaining a first region and a second region.
FIG. 9 is a cross-sectional perspective view taken along line C-C shown in FIG. 6 with some components of the battery pack omitted, for explaining an internal configuration of the battery pack.
FIG. 10 is a cross-sectional view taken along line A-A shown in FIG. 5 for explaining a cross-sectional shape of a fixing member.
FIG. 11 is a diagram for explaining a process of attaching a pouch-type battery cell to the fixing member shown in area D of FIG. 10.
FIG. 12 is a diagram for explaining the size of the area of the pouch-type battery cell and the size of the area of the gap of the fixing member as viewed from the insertion direction.
FIG. 13 is a cross-sectional view taken along line A-A shown in FIG. 5 for explaining a modified example of a case.
FIG. 14 is an overall perspective view of the battery pack for explaining a modified example of a case.
FIG. 15 is a diagram showing a modified example of a guide portion of the fixing member.
FIG. 16 is a diagram showing a modified example of the guide portion of the fixing member.
FIG. 17 is a diagram showing a modified example of the guide portion of the fixing member.

### DETAILED DESCRIPTION

Hereinafter, an example of an embodiment of the present disclosure will be described with reference to the drawings. Various features described below in the following embodiment can be combined with each other.

### <Object 100>

First, an object 100 according to one embodiment is described.

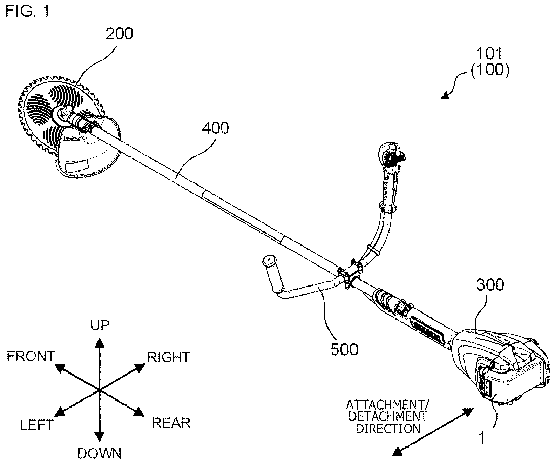

FIG. 1 is a perspective view of an object as seen from above.

In the following description, directions of the object 100 and each member configuring the object 100 are defined based on "up", "down", "left", "right", "front" and "rear" shown in FIG. 1. Furthermore, in the following description, "up" is also referred to as an "upper side" or "upper", and "down" is also referred to as a "lower side" or "lower". Moreover, the direction formed by "up" and "down" is referred to as "up and down" or an "up-down direction. The same applies to "left", "right", "front" and "rear".

The object 100 shown in FIG. 1 is a portable brush cutter 101. The brush cutter 101 includes a cutting blade 200, a main body portion 300, an operation rod 400, a handle 500, and a battery pack 1. The brush cutter 101 is a shoulder band type brush cutter that adopts an electric motor (not shown) as a power source. Although the brush cutter 101 is given as an example of the object 100, the object 100 is not particularly limited as long as it is any type of electric machine that uses the battery pack 1. For example, the object 100 may be an electric working machine, an electric tool, an industrial machine, or the like to which the battery pack 1 can be detachably attached. In the following, an example in which the object 100 is the brush cutter 101 will be described.

As shown in FIG. 1, the brush cutter 101 includes a disk-shaped cutting blade 200 on the front side thereof. The cutting blade 200 is configured to rotate by the rotational power of an electric motor (not shown), and is configured to be able to cut grass and the like by rotating. Specifically, a tipped saw is adopted for the cutting blade 200.

The cutting blade 200 is connected to the front side of the operation rod 400. The operation rod 400 is a pipe-shaped member extending in the front-rear direction, and includes a drive transmission shaft (not shown) therein. The operation rod 400 is configured to transmit power to the cutting blade 200 via the drive transmission shaft. The operation rod 400 includes the main body portion 300 on the rear side thereof.

In the operation rod 400, the handle 500 is attached between the cutting blade 200 and the main body portion 300. The handle 500 is a portion that is held and operated by the operator's hands. The main body portion 300 includes an electric motor (not shown), a control unit (not shown) and the like therein.

The battery pack 1 is detachably attached to the rear side of the main body portion 300. The battery pack 1 is attachable to and detachable from the brush cutter 101 by relatively moving the battery pack 1 in the left-right direction that is a predetermined direction to the brush cutter 101 (an example of an object 100).

### <Battery Pack 1>

Next, the battery pack 1 according to one embodiment is described.

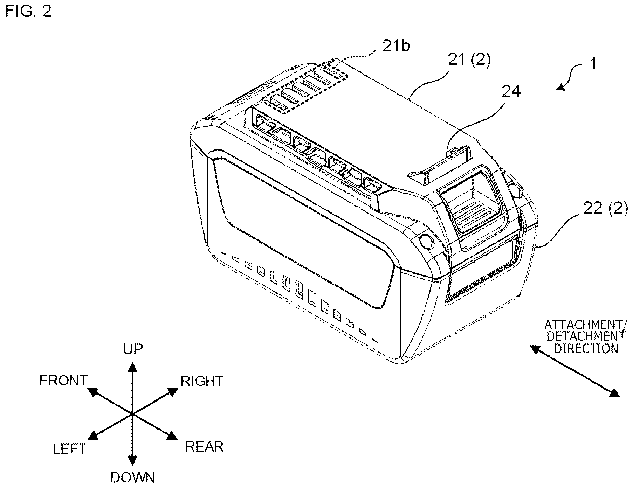

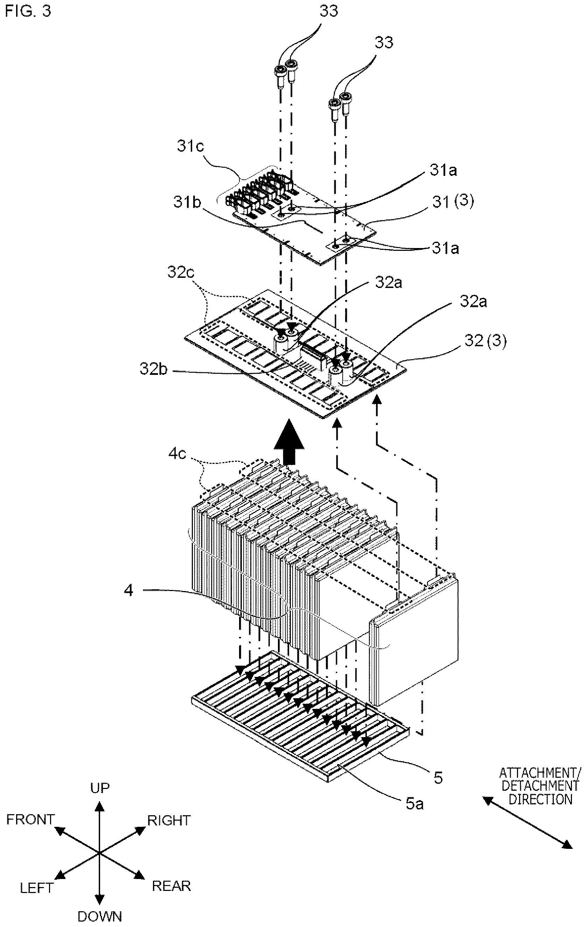

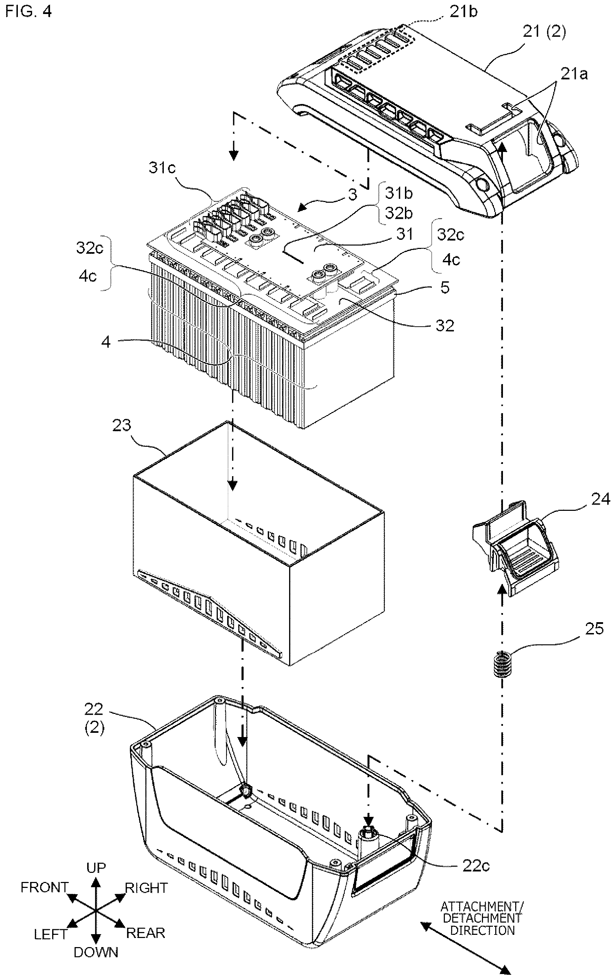

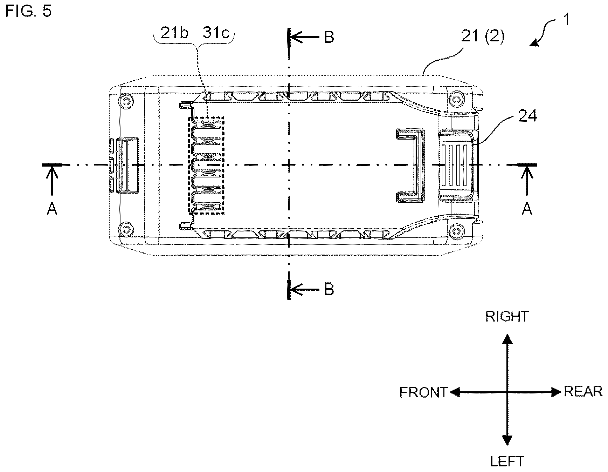

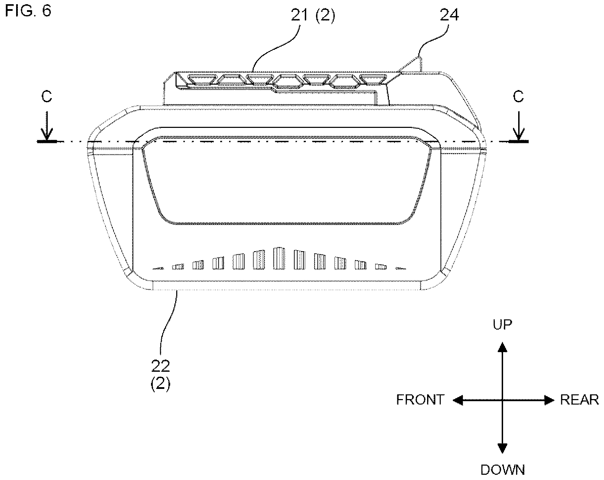

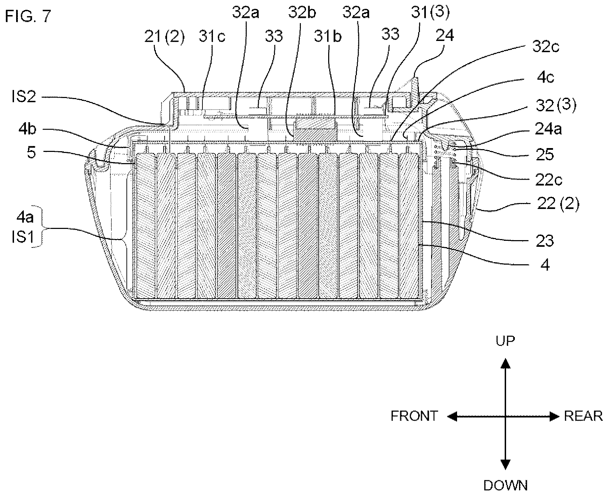

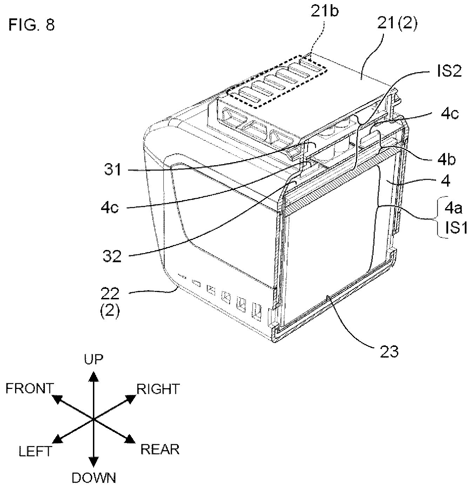

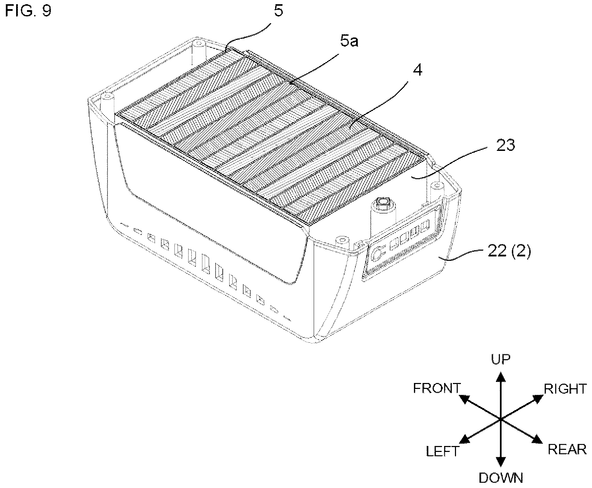

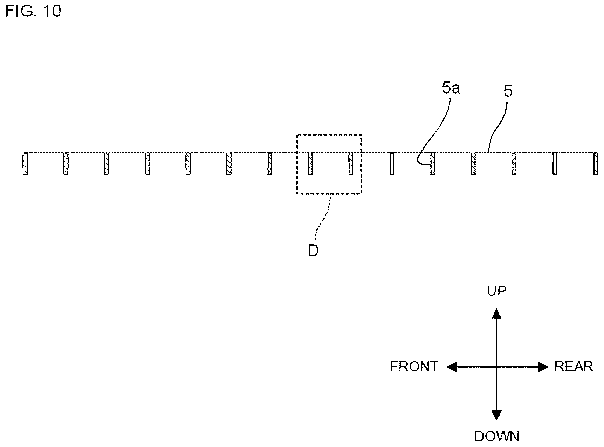

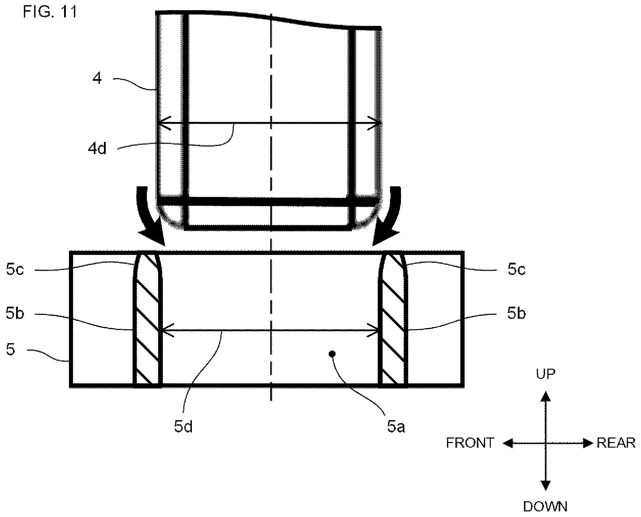

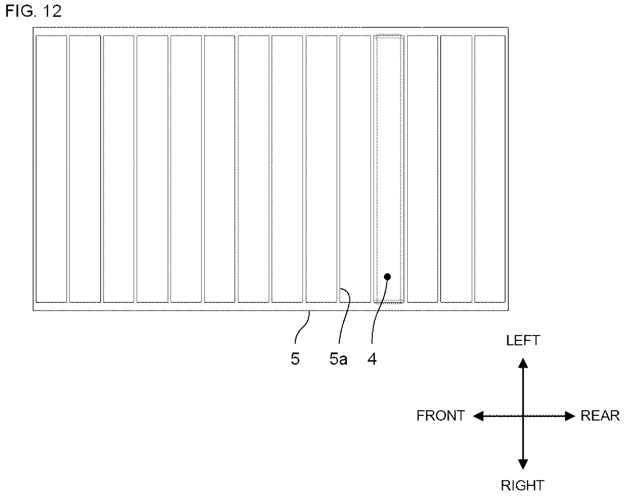

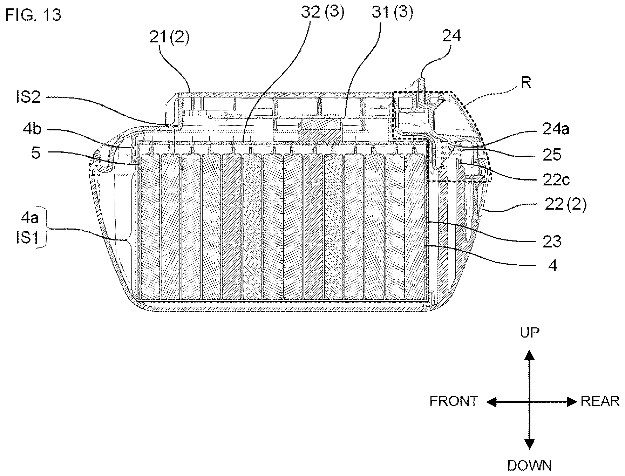

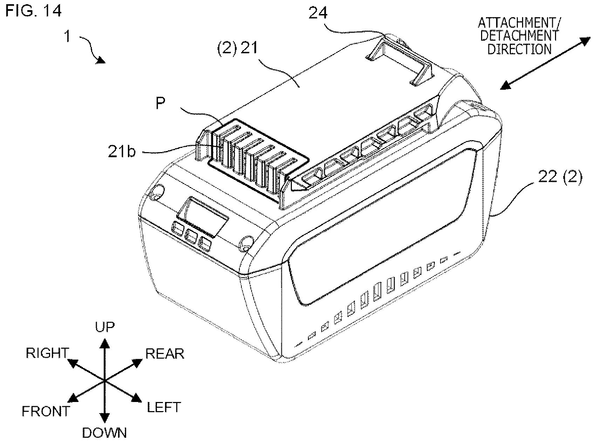

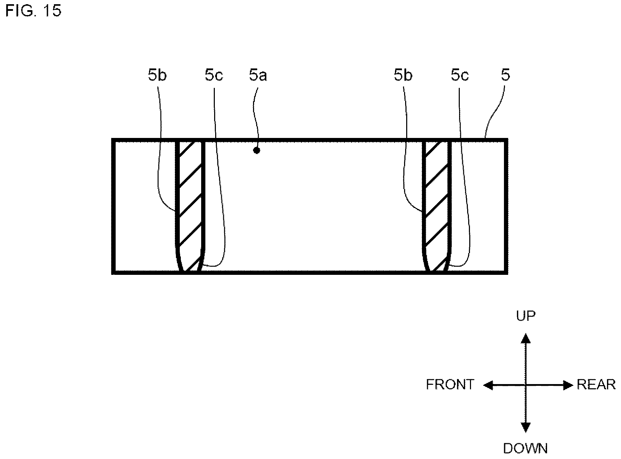

FIG. 2 is an overall perspective view of the battery pack. FIG. 3 is an exploded perspective view showing a configuration of a wiring board, pouch-type battery cells, and a fixing member. FIG. 4 is an exploded perspective view showing a configuration of a case, a wiring board, pouch-type battery cells, and a fixing member. FIG.5 and FIG.6 are overall views of the battery pack. FIG. 7 is a cross-sectional view taken along line A-A shown in FIG. 5 for explaining an internal configuration of the battery pack. FIG. 8 is a cross-sectional perspective view taken along line B-B shown in FIG. 5 for explaining a first region and a second region. FIG. 9 is a cross-sectional perspective view taken along line C-C shown in FIG. 6 with some components of the battery pack omitted, for explaining an internal configuration of the battery pack. FIG. 10 is a cross-sectional view taken along line A-A shown in FIG. 5 for explaining a cross-sectional shape of a fixing member. FIG. 11 is a diagram for explaining the process of attaching a pouch-type battery cell to the fixing member shown in area D of FIG. 10. FIG. 12 is a diagram for explaining the size of the area of the pouch-type battery cell and the size of the area of the gap of the fixing member as viewed from the insertion direction. FIG. 13 is a cross-sectional view taken along line A-A shown in FIG. 5 for explaining a modified example of the case. FIG. 14 is an overall perspective view of the battery pack for explaining a modified example of the case. FIG. 15 to FIG. 17 are diagrams showing modified examples of a guide portion of the fixing member.

In the following description, directions of the battery pack 1 and each member configuring the battery pack 1 are defined based on "up", "down", "left", "right", "front" and "rear" shown in FIG. 2 to FIG. 17. Furthermore, in the following description, "up" is also referred to as an "upper side" or "upper", and "down" is also referred to as a "lower side" or "lower". Moreover, the direction formed by "up" and "down" is referred to as "up and down" or an "up-down direction. The same applies to "left", "right", "front" and "rear".

As shown in FIG. 2, the battery pack 1 has a box shape and includes a case 2. The case 2 includes an upper external housing 21 and a lower external housing 22, so that the case 2 is divided in the up-down direction by a plane defined by front/rear and left/right. The upper external housing 21 and the lower external housing 22 are fixed together by fastening members (not shown) such as screws.

As shown in FIG. 3 and FIG. 4, an inner housing 23, a lever 24, a spring 25, a wiring board 3, a plurality of pouch-type battery cells 4, and a fixing member 5 are housed in the box formed by the upper external housing 21 and the lower external housing 22. In other words, the battery pack 1 includes a wiring board 3, a plurality of pouch-type battery cells 4 and a fixing member 5, which are housed in the case 2.

As shown in FIG. 4 and FIG. 6, the upper external housing 21 has a lid shape, and is assembled to the lower external housing 22 to house the above-mentioned components in the case 2. The upper external housing 21 includes a lever attachment portion 21a and a terminal attachment portion 21b.

The lever attachment portion 21a includes a hole formed in the rear side of the upper external housing 21, and the lever 24 is inserted into the hole from the lower side to the upper side of the case 2. As shown in FIG. 5, the terminal attachment portion 21b includes a plurality of holes formed on the front side of the upper external housing 21. Specifically, the terminal attachment portion 21b include six holes. A connection terminal 31c of the wiring board 3 is arranged (inserted) inside the holes of the terminal attachment portion 21b, and it is configured so that the terminal (not shown) included in the brush cutter 101 is connected to the connection terminal 31c of the wiring board 3 in a state where the battery pack 1 is attached to the brush cutter 101. The configuration of the lever 24 and the connection terminal 31c of the wiring board 3 will be described in detail later.

As shown in FIG. 4, the lower external housing 22 has a box shape and is configured to house each component therein. The inner housing 23 is housed in the lower external housing 22. The inner housing 23 has a box shape and is configured to further house each component therein.

As shown in FIG. 7, the lower external housing 22 includes a spring attachment portion 22c on the upper rear side, and a spring 25 is configured to be attached to the spring attachment portion 22c. The spring 25 is a spiral spring. The upper side of the spring 25 is inserted into a spring attachment portion 24a of the lever 24. The upper side of the lever 24 is inserted into the lever attachment portion 21a, and is arranged to be able to freely protrude from and retract into the lever attachment portion 21a (upper external housing 21) in a state where the upper external housing 21 and the lower external housing 22 are assembled. When the lever 24 protrudes, the battery pack 1 is fixed to the brush cutter 101, and when the lever 24 is retracted, the battery pack 1 which has been fixed becomes removable from the brush cutter 101.

As shown in FIG. 4, the wiring board 3 is arranged on the upper side inside the battery pack 1. The wiring board 3 includes a first wiring board 31 and a second wiring board 32. The first wiring board 31 and the second wiring board 32 are electrically connected by a connector connection portion 31b included in the first wiring board 31 and a connector 32b included in the second wiring board 32. The second wiring board 32 includes electrode attachment portions 32c, and the electrodes 4c of the pouch-type battery cells 4 are inserted into the electrode attachment portions 32c and fixed by welding. That is, the wiring board 3 is configured to allow the electrodes 4c of the plurality of pouch-type battery cells 4 to be connected thereto. The electrodes 4c may be fixed by being press-fitted into the electrode attachment portions 32c. In this case, the defective pouch-type battery cell 4 is easily replaced with a new pouch-type battery cell 4. In addition, bolts 33 are inserted into through holes 31a of the first wiring board 31, and the threaded portions of the bolts 33 protruding from the first wiring board 31 screw into threaded holes 32a of the second wiring board 32. As a result, the first wiring board 31 and the second wiring board 32 are fixed together.

Furthermore, the first wiring board 31 includes the connection terminal 31c on the front upper side. As shown in FIG. 5, the connection terminal 31c is configured to be electrically connectable via the terminal attachment portion 21b of the upper external housing 21 in the state where the first wiring board 31 is housed in the case 2. Thus, the battery pack 1 and the brush cutter 101 are electrically connected in a state where the battery pack 1 is attached to the brush cutter 101. In other words, the battery pack 1 includes the connection terminal 31c that is electrically connectable to the brush cutter 101 (an example of the object 100).

Furthermore, as shown in FIG. 7, a plurality of pouch-type battery cells 4 is housed in the inner housing 23. The pouch-type battery cells 4 are secondary batteries, such as a pouch-type (laminated) lithium-ion secondary batteries.

The number of pouch-type battery cells 4 and the specification of each pouch-type battery cell 4 are set so that the battery pack 1 has a sufficiently high output and charging capacity suitable for work performed by the brush cutter 101. Specifically, fourteen pouch-type battery cells 4 having the same specification are connected in series so that the battery pack 1 has a predetermined output and charging capacity.

In addition, as shown in FIG. 3, the plurality of pouch-type battery cells 4 is arranged in a row in the front-rear direction, i.e., in the attachment/detachment direction of the battery pack 1, with their electrodes 4c on the upper side. In other words, the plurality of pouch-type battery cells 4 is arranged in a row in a predetermined direction (for example, in the front-rear direction) with each of the electrodes 4c of the pouch-type battery cells 4 on the same side. According to such an aspect, the number of pouch-type battery cells 4 can be increased by changing the size of the battery pack 1 in a predetermined direction (for example, in the front-rear direction). As a result, even the battery pack 1 with an increased number of pouch-type battery cells 4 can be attached to and detached from the brush cutter 101 to/from which the battery pack 1 before increasing the number of pouch-type battery cells 4 can be attached and detached, without interfering with the brush cutter 101. In other words, even if the number of pouch-type battery cells 4 is changed, the battery pack 1 can be connected to the same brush cutter 101. Furthermore, since the electrodes 4c of the pouch-type battery cells 4 and the wiring board 3 are arranged so as to be connectable, the battery pack 1 can be easily manufactured.

Each pouch-type battery cell 4 has a positive electrode 4c and a negative electrode 4c. The plurality of pouch-type battery cells 4 is arranged in a row so that the arrangement of the positive electrodes 4c and the negative electrodes 4c alternate between the right and left sides, i.e., so that the front and back of the adjacent pouch-type battery cells 4 are reversed. This facilitates connecting of each pouch-type battery cell 4 in series.

Furthermore, as shown in FIG. 7, the plurality of pouch-type battery cells 4 each includes electrodes 4c on the upper side, and the wiring board 3 is connected to the electrodes 4c. In addition, the connection terminal 31c is arranged at the front upper side of the first wiring board 31 of the wiring board 3. That is, the first wiring board 31 on which the connection terminal 31c is mounted is arranged on the opposite side of the plurality of pouch-type battery cells 4 relative to the second wiring board 32 to which the plurality of pouch-type battery cells 4 is connected. In other words, the connection terminal 31c is arranged on the opposite side of the plurality of pouch-type battery cells 4 relative to the wiring board 3. According to such an aspect, the electrodes 4c of the pouch-type battery cells 4 and the connection terminal 31c can be arranged in close positions, thereby reducing power loss while maintaining the manufacturability of the battery pack 1.

As shown in FIG. 3, the plurality of pouch-type battery cells 4 is arranged so as to match the position of each electrode 4c with the position of each of the electrode attachment portions 32c of the wiring board 3 when their electrodes 4c are attached to the wiring board 3. In this case, the position adjustment is performed by attaching the pouch-type battery cells 4 to the gaps 5a of the fixing member 5. Specifically, as shown in FIG. 10, the fixing member 5 includes gaps 5a into which the pouch-type battery cells 4 are each inserted. Furthermore, as shown in FIG. 11, each pouch-type battery cell 4 is inserted into each gap 5a along the insertion direction, that is, from the upper side to the lower side. The position adjustment of the plurality of pouch-type battery cells 4 is performed by inserting each pouch-type battery cell 4 into each gap 5a provided in the fixing member 5. In this case, the amount of insertion in the up-down direction is, for example, such that the fixing member 5 is inserted up to the position of the upper end of the side surface of the pouch-type battery cell 4. In other words, the fixing member 5 is configured to position the plurality of pouch-type battery cells 4 relative to the wiring board 3 by fixing the pouch-type battery cells 4. According to such as aspect, by assembling the pouch-type battery cells 4 and the fixing member 5, it is possible to position the pouch-type battery cells 4 when connecting them to the wiring board 3, thereby more easily manufacturing the battery pack 1.

In addition, the fixing member 5 may include fixing portions 5b and guide portions 5c. As shown in FIG. 11, specifically, the fixing member 5 includes guide portions 5c on the upper side of the gaps 5a and fixing portions 5b on the lower side of the gaps 5a. In other words, each guide portion 5c is connected to each fixing portion 5b. In addition, the width 5d of the fixing portion 5b is narrower than the width 4d of the pouch-type battery cell 4. Furthermore, as shown in FIG. 12, the area of the gap 5a viewed from the insertion direction (up-down direction) in its natural state, i.e., the state where no external force is being applied before the pouch-type battery cell 4 is inserted, is smaller than the area of each pouch-type battery cell 4 viewed from the insertion direction. In other words, each of the gaps 5a has an opening area, as viewed from the insertion direction (up-down direction) into which the pouch-type battery cell 4 is inserted, that is smaller than the area of each pouch-type battery cell 4 as viewed from the insertion direction. With this configuration, the fixing portion 5b is configured to fix each pouch-type battery cell 4 by being in close contact with the pouch-type battery cell 4 inserted into the gap 5a. According to such an aspect, positioning of the pouch-type battery cells 4 when connecting them to the wiring board 3 can be easily performed, further improving manufacturability.

As shown in FIG. 11, the width defined by the guide portion 5c in the front-rear direction narrows as it extends from the upper side to the lower side, which is the insertion direction. As a result, when the pouch-type battery cell 4 is inserted into the gap 5a, the pouch-type battery cell 4 is guided so that the center of the pouch-type battery cell 4 in the front-rear direction matches with the center of the gap 5a in the front-rear direction. Furthermore, the width defined by the guide portion 5c in the left-right direction also similarly narrows as it extends from the upper side to the lower side, which is the insertion direction. As a result, when the pouch-type battery cell 4 is inserted into the gap 5a, the pouch-type battery cell 4 is guided so that the center of the pouch-type battery cell 4 in the left-right direction matches with the center of the gap 5a in the left-right direction. In other words, each of the guide portions 5c is configured to guide each pouch-type battery cell 4 to each fixing portion 5b when each pouch-type battery cell 4 and each fixing portion 5b are assembled. According to such an aspect, the pouch-type battery cells 4 and the fixing member 5 can be assembled more easily and accurately, thereby efficiently manufacturing the battery pack 1.

As shown in FIG. 3, the fixing member 5 includes the same number of gaps 5a as the pouch-type battery cells 4. Specifically, the fixing member 5 includes fourteen gaps 5a, and one pouch-type battery cell 4 is inserted into each gap 5a. As shown in FIG. 7 and FIG. 9, in a state where each pouch-type battery cell 4 is inserted into the gap 5a of the fixing member 5, the gap 5a and the pouch-type battery cell 4 come into close contact with each other. Specifically, the pouch-type battery cell 4 is inserted into the gap 5a of the fixing member 5 in a state where the pouch portion protruding outward from the side of the pouch-type battery cell 4 is folded. Thus, the gap 5a and the pouch-type battery cell 4 come into close contact with each other. Furthermore, with the fixing member 5 being housed inside the inner housing 23, the fixing member 5 and the inner housing 23 come into close contact with each other. As a result, a first space IS1 is formed below the fixing member 5 by the inner housing 23, the plurality of pouch-type battery cells 4, and the fixing member 5, and a second space IS2 is formed above the fixing member 5. In other words, the fixing member 5 is configured to divide the inside of the battery pack 1 into the first space IS1 and the second space IS2.

As shown in FIG. 7, the first space IS1 and the second space IS2 are configured so as not to communicate with each other by the fixing member 5 being in close contact with the inner housing 23 and the pouch-type battery cells 4. In other words, the second space IS2 is configured not to communicate with the first space IS1. That is, the second space IS2 has a sealing property such that it does not communicate with the first space IS1, at least by the pouch-type battery cells 4 and the fixing member 5 being in close contact with each other. According to such an aspect, the components positioned in the second space IS2 can be protected from water, dust, and the like that may enter through the first space IS1 while improving manufacturability by positioning the pouch-type battery cells 4 with the fixing member 5 when connecting the battery cells 4 to the wiring board 3. Furthermore, according to such an aspect, in the brush cutter 101 shown in FIG. 1, when the battery pack 1 is attached and the cutting blade 200 is being used to cut grass or the like growing out of the ground, water that has entered the first space IS1 from outside the case 2 can be suppressed from entering the second space IS2. In other words, water can be suppressed from coming into contact with the electrodes 4c of the pouch-type battery cells 4 positioned in the second space IS2.

As shown in FIG. 13, a lever storage space R may be formed in the case 2. The lever storage space R is a space formed by assembling the upper external housing 21 and the lower external housing 22. A lever 24 is arranged in the lever storage space R so as to be movable relative to the upper external housing 21. Furthermore, the lever storage space R is configured so as not to communicate with the first space IS1 and the second space IS2 by dividing the inside of the case 2. In other words, the lever attachment portion 21a is configured so as not to communicate with the first space IS1 and the second space IS2.

Furthermore, as shown in FIG. 14, the upper external housing 21 may be provided with a packing P around the terminal attachment portion 21b. As a result, when the battery pack 1 is attached to the brush cutter 101, the packing P comes into close contact with the brush cutter 101 and the upper external housing 21, thus preventing communication between the second space IS2 and the outside of the battery pack 1. Note that the packing P may be any material that has a sealing property when it comes into close contact with the brush cutter 101 and the upper external housing 21, and may be, for example, a rubber packing. According to such an aspect, the second space IS2 can be isolated from the outside of the case when the battery pack 1 is attached to the brush cutter 101.

Furthermore, the fixing member 5 may be an elastic body. The elastic body can be composed of at least one selected from a group consisting of norbornene rubber (NB), chloroprene rubber (CR), acrylonitrile butadiene rubber (NBR), urethane rubber, fluororubber, and silicone rubber. According to such an aspect, the elasticity of the fixing member 5 makes it possible to position the pouch-type battery cells 4 when connecting them to the wiring board 3 and to prevent the intrusion of water, dust, and the like, thereby further improving manufacturability and a sealing property. The fixing member 5 is not limited to an elastic body, but may be any member that can come into close contact with the pouch-type battery cells 4, for example, a member that comes into close contact with them by plastic deformation, or a member that comes into close contact with them by using a packing, a sealant, etc.

Furthermore, the fixing member 5 may be made of a single member. According to such an aspect, the positioning accuracy when connecting the pouch-type battery cells 4 to the wiring board 3 is improved, and the airtightness is improved, thereby improving manufacturability and a sealing property. It is also possible to prevent an increase in the number of components of the battery pack 1.

As shown in FIG. 8, the fixing member 5 divides the space into the first space IS1 and the second space IS2, so that the pouch-type battery cells 4 have a first region 4a and a second region 4b that are defined according to the position where the fixing member 5 is attached. That is, each pouch-type battery cell 4 includes a first region 4a positioned in the first space IS1 and a second region 4b positioned in the second space IS2. As shown in FIG. 8, specifically, the fixing member 5 is attached to the upper side of the pouch-type battery cells 4. Furthermore, each pouch-type battery cell 4 has the first region 4a below the position where the fixing member 5 is attached, and the second region 4b above the position where the fixing member 5 is attached. The second region 4b includes the electrodes 4c arranged on the upper side of the pouch-type battery cells 4. In other words, the second region 4b includes the electrodes 4c. According to such an aspect, it is possible to prevent malfunction and damage by protecting the electrodes 4c of the pouch-type battery cells 4 from the intrusion of water, dust, and the like while improving manufacturability by positioning the pouch-type battery cells 4 with the fixing member 5 when connecting the battery cells 4 to the wiring board 3.

### [Others]

The battery pack 1 according to one embodiment may be implemented in the following aspect.

In one embodiment described above, a case has been described as an example in which the pouch-type battery cells 4 are housed in the battery pack 1. However, the present disclosure is not limited thereto. For example, square or cylindrical battery cells may be housed in the battery pack 1.

In one embodiment described above, a case has been described as an example in which the position of the pouch-type battery cell 4 and the fixing member 5 in the up-down direction is such that the fixing member 5 is inserted up to the position of the upper end of the side surface of the pouch-type battery cell 4. However, the present disclosure is not limited thereto. For example, the fixing member 5 may be inserted into a predetermined position of the pouch-type battery cell 4 using a jig or the like.

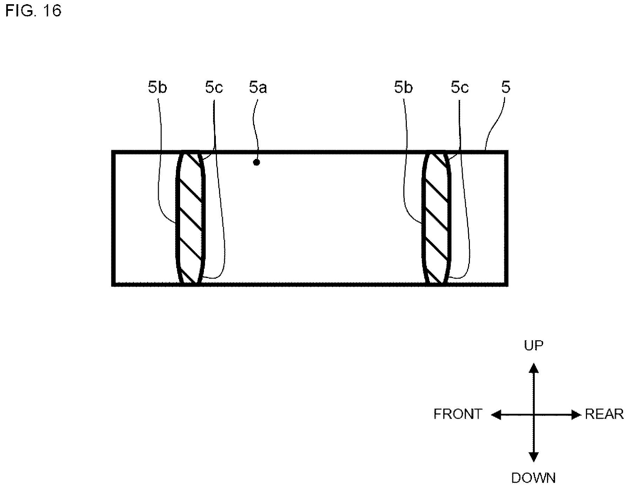

In the guide portion 5c shown in FIG. 11, a case has been described as an example in which the insertion direction is from the upper side to the lower side. However, the present disclosure is not limited thereto. For example, the insertion direction may be from the lower side to the upper side. As shown in FIG. 15, the fixing member 5 in this case includes the guide portion 5c on the lower side of the gap 5a and the fixing portion 5b on the upper side of the gap 5a. Furthermore, the insertion direction may be either from the upper side or from the lower side. As shown in FIG. 16, the fixing member 5 in this case includes the guide portions 5c on the upper side and lower side of each gap 5a, and includes the fixing portion 5b between the upper guide portion 5c and the lower guide portion 5c.

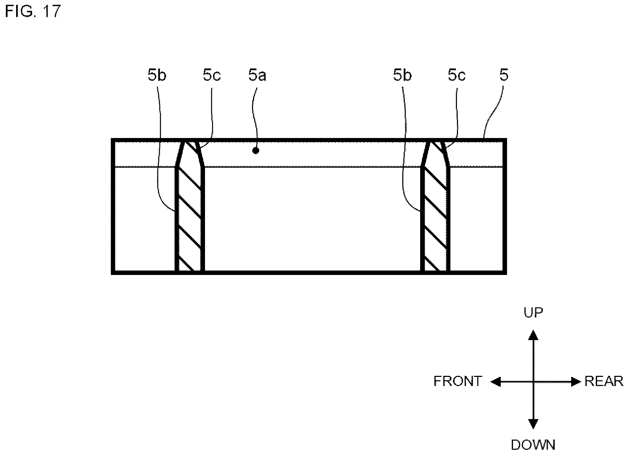

In the guide portion 5c shown in FIG. 11, a case has been described as an example in which the width defined in the front-rear direction narrows in a curved shape as it extends from the upper side to the lower side, which is the insertion direction. However, the present disclosure is not limited thereto. As shown in FIG. 17, for example, the width may linearly narrow. In addition, although not shown, the width of the guide portions 5c may narrow stepwise (discontinuously).

Furthermore, the present disclosure may be provided with each of the following aspects.
(1) A battery pack that is attachable to and detachable from an object by relatively moving the battery pack in a predetermined direction to the object, the battery pack comprising: a plurality of pouch-type battery cells arranged in a row in the predetermined direction with each of electrodes of the pouch-type battery cells on a same side; and a wiring board configured to allow the electrodes of the pouch-type battery cells to be connected thereto.

According to such an aspect, the number of pouch-type battery cells can be increased by changing the size of the battery pack in a predetermined direction. As a result, even the battery pack with an increased number of pouch-type battery cells can be attached to and detached from the object to/from which the battery pack before increasing the number of pouch-type battery cells can be attached and detached, without interfering with the object. In other words, even if the number of pouch-type battery cells is changed, the battery pack can be connected to the same object. Furthermore, since the electrodes of the pouch-type battery cells and the wiring board are arranged so as to be collectively connected, the battery pack can be easily manufactured.

(2) The battery pack according to (1), further comprising a connection terminal that is electrically connectable to the object, wherein the connection terminal is arranged on an opposite side of the pouch-type battery cells relative to the wiring board.

According to such an aspect, the electrodes of the pouch-type battery cells and the connection terminal can be arranged in close positions, thereby reducing power loss while maintaining the manufacturability of the battery pack.

(3) The battery pack according to (1) or (2), further comprising a fixing member configured to position the pouch-type battery cells relative to the wiring board by fixing the pouch-type battery cells.

According to such as aspect, by assembling the pouch-type battery cells and the fixing member, it is possible to position the pouch-type battery cells when connecting them to the wiring board, thereby more easily manufacturing the battery pack.

(4) The battery pack according to (3), wherein: the fixing member is configured to divide an inside of the battery pack into a first space and a second space, and the second space is configured not to communicate with the first space.

According to such an aspect, the components positioned in the second space can be protected from the intrusion of water, dust, and the like while improving manufacturability by positioning the pouch-type battery cells with the fixing member when connecting the battery cells to the wiring board.

(5) The battery pack according to (4), wherein: each of the pouch-type battery cells includes a first region positioned in the first space and a second region positioned in the second space, and the second region includes the electrodes.

According to such an aspect, it is possible to prevent malfunction and damage by protecting the electrodes of the pouch-type battery cells from the intrusion of water, dust, and the like while improving manufacturability by positioning the pouch-type battery cells with the fixing member when connecting the battery cells to the wiring board.

(6) The battery pack according to any one of (3) to (5), wherein: the fixing member includes fixing portions and guide portions, each of the fixing portions is configured to fix each of the pouch-type battery cells, and each of the guide portions is connected to each of the fixing portions and is configured to guide each of the pouch-type battery cells to each of the fixing portions when each of the pouch-type battery cells and each of the fixing portions are assembled.

According to such an aspect, the pouch-type battery cells and the fixing member can be assembled more easily and accurately, thereby efficiently manufacturing the battery pack.

(7) The battery pack according to any one of (3) to (6), wherein: the fixing member includes gaps into which the pouch-type battery cells are each inserted, and each of the gaps has an opening area, as viewed from an insertion direction into which each of the pouch-type battery cells is inserted, that is smaller than an area of each of the pouch-type battery cells as viewed from the insertion direction.

According to such an aspect, positioning of the pouch-type battery cells when connecting them to the wiring board can be easily performed, further improving manufacturability.

(8) The battery pack according to any one of (3) to (7), wherein: the fixing member is an elastic body.

According to such an aspect, the elasticity of the fixing member makes it possible to position the pouch-type battery cells when connecting them to the wiring board and to prevent the intrusion of water, dust, and the like, thereby further improving manufacturability and a sealing property.

(9) The battery pack according to any one of (3) to (8), wherein: the fixing member is made of a single member.

According to such an aspect, the positioning accuracy when connecting the pouch-type battery cells to the wiring board is improved, and the airtightness is improved, thereby improving manufacturability and a sealing property.

Of course, the present disclosure is not limited thereto.

Finally, various embodiments of the present disclosure have been described, but these are presented as examples and are not intended at all to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

## Claims

1. A battery pack that is attachable to and detachable from an object by relatively moving the battery pack in a predetermined direction to the object, the battery pack comprising:
a plurality of pouch-type battery cells arranged in a row in the predetermined direction with each of electrodes of the pouch-type battery cells on a same side; and
a wiring board configured to allow the electrodes of the pouch-type battery cells to be connected thereto.

2. The battery pack according to claim 1, further comprising a connection terminal that is electrically connectable to the object, wherein the connection terminal is arranged on an opposite side of the pouch-type battery cells relative to the wiring board.

3. The battery pack according to claim 1 or 2, further comprising
a fixing member configured to position the pouch-type battery cells relative to the wiring board by fixing the pouch-type battery cells.

4. The battery pack according to claim 3, wherein:
the fixing member is configured to divide an inside of the battery pack into a first space and a second space, and
the second space is configured not to communicate with the first space.

5. The battery pack according to claim 4, wherein:
each of the pouch-type battery cells includes a first region positioned in the first space and a second region positioned in the second space, and
the second region includes the electrodes.

6. The battery pack according to any one of claims 3 to 5, wherein:
the fixing member includes fixing portions and guide portions,
each of the fixing portions is configured to fix each of the pouch-type battery cells, and
each of the guide portions is connected to each of the fixing portions and is configured to guide each of the pouch-type battery cells to each of the fixing portions when each of the pouch-type battery cells and each of the fixing portions are assembled.

7. The battery pack according to any one of claims 3 to 6, wherein:
the fixing member includes gaps into which the pouch-type battery cells are each inserted, and
each of the gaps has an opening area, as viewed from an insertion direction into which each of the pouch-type battery cells is inserted, that is smaller than an area of each of the pouch-type battery cells as viewed from the insertion direction.

8. The battery pack according to any one of claims 3 to 7, wherein:
the fixing member is an elastic body.

9. The battery pack according to any one of claims 3 to 8, wherein:
the fixing member is made of a single member.
